# EUROPEAN PATENT APPLICATION

(11) **EP 4 810 838 A1**
(43) Date of publication of application: **23.09.2026**
(21) Application number: 24902995.0
(22) Date of filing: 13.12.2024
(51) Int. Cl.: F16K 11/10, F16K 15/18, F16K 27/02, B60H 1/00

(54) **VALVE SEAT, FLOW CONTROL DEVICE, AND THERMAL MANAGEMENT SYSTEM**

(30) Priority: 13.12.2023 CN 202323406375 U
(71) Applicant: Zhejiang Dunan Artificial Environment Co., Ltd., Shaoxing, Zhejiang 311835 (CN)
(72) Inventor: ZHONG, Shishu, Shaoxing, Zhejiang 311835 (CN); WANG, Fugang, Shaoxing, Zhejiang 311835 (CN); JIN, Ju, Shaoxing, Zhejiang 311835 (CN); ZHU, Peijun, Shaoxing, Zhejiang 311835 (CN)
(74) Representative: Winter, Brandl - Partnerschaft mbB
(86) International application number: PCT/CN2024/139387
(87) International publication number: WO 2025/124580

(57) **Abstract**

The present disclosure provides a valve seat, a flow control device and a thermal management system. The valve seat is used for mounting a check valve and an electronic expansion valve, the valve seat is internally provided with a first flow channel and a second flow channel; the check valve is provided in the first flow channel and operates in cooperation with an inner wall of the first flow channel, such that a liquid in the first flow channel flows in a single direction; and the electronic expansion valve is provided on the valve seat and cooperates with the second flow channel, to control opening/closing of the second flow channel; wherein the first flow channel and the second flow channel are independently arranged at an interval inside the valve seat. In the present disclosure, the flow channel controlled by the check valve and the flow channel controlled by the electronic expansion valve operate independently without affecting each other and without intersection, thereby ensuring that the expansion valve and the check valve can operate independently; and the regulation effects of the check valve and the electronic expansion valve can be achieved respectively, thereby effectively meeting the use requirements of the thermal management system in multiple modes and multiple working conditions. The valve seat proposed in the present disclosure has reliable operation, simple structure, easy processing and low costs.

## Description

The present disclosure claims priority to patent application no. 202323406375.1, filed to the China National Intellectual Property Administration on December 13, 2023 and entitled "Valve Seat, Flow Control Device, and Thermal Management System".

### Technical Field

The present disclosure relates to the technical field of valve equipment, and in particular, to a valve seat, a flow control device, and a thermal management system.

### Background

At present, a flow control device in an existing thermal management system (especially a vehicle-mounted thermal management system) includes an electronic expansion valve and a check valve that are provided in a pipeline, so as to control refrigerant in the pipeline by the electronic expansion valve and the check valve. In order to simplify a structure, the existing electronic expansion valve and check valve are usually integrally mounted on one valve seat, and the valve seat is internally provided with an expansion valve cavity cooperating with the electronic expansion valve and a check valve cavity cooperating with the check valve. The expansion valve cavity and the check valve cavity inside the existing valve seat can usually be in communication with each other, such that the electronic expansion valve and the check valve cannot be opened at the same time or operate separately, that is, the expansion valve cavity intersects with the check valve cavity, such that only a single flow path can be allowed to communicate during operation. That is to say, when the electronic expansion valve is closed, the check valve is opened, and fluid only flows through the check valve; and when the check valve is closed, the electronic expansion valve is opened, and fluid only flows through the electronic expansion valve. As a result, under some working conditions of the thermal management system, the electronic expansion valve and the check valve integrated on one valve seat cannot allow two flow paths to communicate at the same time, that is, the electronic expansion valve and the check valve cannot be allowed to be in an open mode at the same time. A flexibility of regulating refrigerant flow is limited, regulation functions of the check valve and the electronic expansion valve cannot be achieved respectively, and use requirements of the thermal management system in multiple modes and multiple working conditions cannot be met.

### Summary

The present disclosure provides a valve seat, a flow control device and a thermal management system, so as to solve a problem in the related art that an electronic expansion valve and a check valve cannot operate independently, and thus cannot meet an use requirements of a thermal management system in multiple modes and multiple working conditions.

In order to solve a described problem, according to one aspect of the present disclosure, provided is a valve seat, the valve seat is used for mounting a check valve and an electronic expansion valve, the valve seat is internally provided with a first flow channel and a second flow channel; the check valve is provided in the first flow channel and operates in cooperation with an inner wall of the first flow channel, such that a liquid in the first flow channel flows in a single direction; and the electronic expansion valve is provided on the valve seat and cooperates with the second flow channel, to control opening/closing of the second flow channel; wherein the first flow channel and the second flow channel are independently arranged at an interval inside the valve seat.

Further, two ends of the second flow channel are a first through port and a second through port respectively, and the first through port and the second through port are respectively provided at two opposite sides of an outer periphery of the valve seat; when the electronic expansion valve is in an open state, the first through port is in communication with the second through port; and when the electronic expansion valve is in a closed state, the first through port is disconnected from the second through port.

Further, the second flow channel includes a first through section, a mounting section and a second through section which are sequentially in communication with each other, and a portion of the electronic expansion valve is provided in the mounting section and cooperates with an inner wall of the mounting section; the first through port is an opening of the first through section, and the second through port is an opening of the second through section; wherein a central axis of the first through section is parallel to a central axis of the second through section; the central axis of the first through section and the central axis of the second through section are perpendicular to a central axis of the mounting section; and the electronic expansion valve controls opening/closing of the second flow channel by means of lifting/lowering of a valve needle inside the electronic expansion valve, and a lifting/lowering direction of the valve needle is parallel to the central axis of the mounting section.

Further, two ends of the first flow channel are a one-way inlet and a one-way outlet respectively, the one-way outlet and the one-way inlet are respectively provided at two opposite sides of the outer periphery of the valve seat, one of the one-way inlet and the one-way outlet, and the second through port are located at a same side on the outer periphery of the valve seat, and an other thereof and the first through port are located at a same side on the outer periphery of the valve seat; when the check valve is in an open state, the one-way outlet is in communication with the one-way inlet, and a liquid enters from the one-way inlet, and flows out from the one-way outlet; and when the check valve is in a closed state, the one-way outlet is disconnected from the one-way inlet.

Further, the first flow channel includes an inflow section, an opening/closing section and an outflow section which are sequentially in communication with each other, wherein the check valve is movably arranged in the opening/closing section and is in limiting fit with an inner wall of the opening/closing section; the one-way inlet is an inlet of the inflow section, and the one-way outlet is an outlet of the outflow section; wherein a central axis of the inflow section, a central axis of the opening/closing section and a central axis of the outflow section are collinear; and a movement direction of the check valve is parallel to the central axis of the opening/closing section.

Further, a first valve port is provided at a joint between the opening/closing section and the inflow section, and the check valve is used for opening/closing the first valve port; an end of the opening/closing section close to the first valve port is provided with an enlarged-diameter portion, and the enlarged-diameter portion has a flow area larger than a flow area of the first valve port; wherein an inner wall surface of the enlarged-diameter portion is a tapered surface; and the opening/closing section further includes a straight cylindrical portion in communication with the enlarged-diameter portion, the straight cylindrical portion has an inner diameter smaller than an inner diameter of the inflow section and an inner diameter of the outflow section, and an inner wall surface of the straight cylindrical portion is a cylindrical surface.

Further, the second flow channel includes a first through section, a mounting section and a second through section which are sequentially in communication with each other, and a portion of the electronic expansion valve is provided in the mounting section and cooperates with an inner wall of the mounting section; a central axis of the first through section and a central axis of the second through section are parallel to the central axis of the inflow section, the central axis of the opening/closing section and the central axis of the outflow section.

According to another aspect of the present disclosure, a flow control device is provided. The flow control device is used in a thermal management system, to control flowing of a liquid; and the flow control device includes a check valve, an electronic expansion valve and the valve seat as described above, wherein the check valve is provided in a first flow channel of the valve seat, and the electronic expansion valve cooperates with a second flow channel of the valve seat.

Further, the first flow channel includes an inflow section, an opening/closing section and an outflow section which are sequentially in communication with each other, and a first valve port is provided at a joint between the opening/closing section and the inflow section; an end of the opening/closing section close to the first valve port is provided with an enlarged-diameter section; the check valve includes a guide member, a piston member and a sealing member; an end of the guide member is fixedly arranged, and an other end thereof is in elastic limiting fit with an end of the piston member; an other end of the piston member is arranged toward the first valve port; the sealing member is mounted on an other end of the piston member and is used for being in abutting fit with an inner wall of the enlarged-diameter portion; and the piston member moves along a central axis of the opening/closing section under guidance of the guide member, so as to drive the sealing member to open/close the first valve port.

Further, the check valve further includes an elastic member; the guide member is internally provided with a first limiting cavity, the piston member is internally provided with a second limiting cavity, and a portion of the guide member is located in the second limiting cavity and is in sliding limiting fit with an inner wall of the second limiting cavity; a portion of the elastic member is located in the first limiting cavity, and an other portion is located in the second limiting cavity; and two ends of the elastic member are respectively abutted against a bottom wall of the first limiting cavity and a bottom wall of the second limiting cavity, such that the guide member is in elastic fit with the piston member.

Further, the electronic expansion valve includes a valve needle, a drive screw, and a transmission structure; the drive screw is connected to the valve needle by the transmission structure, the drive screw is rotatable relative to the valve needle, and the drive screw moves axially to drive the valve needle to move axially, so as to control opening/closing of the electronic expansion valve.

Further, the electronic expansion valve further includes a protective housing structure and a mounting seat structure, wherein the protective housing structure is internally provided with a protective cavity, and at least portions of the drive screw and the transmission structure are located in the protective cavity; and the protective housing structure is fixedly provided on the mounting seat structure; wherein the second flow channel includes a first through section, a mounting section and a second through section which are sequentially in communication with each other, and at least a portion of the mounting seat structure is provided in the mounting section.

Further, the electronic expansion valve further includes a sealing body structure and a switch seat structure, wherein an end of the sealing body structure along an axial direction of the valve needle is provided at an end of the mounting seat structure away from the protective housing structure, and the sealing body structure is internally in communication with the protective cavity; the valve needle is movably provided on the sealing body structure and is in limiting fit with an inner wall of the sealing body structure; the switch seat structure is fixedly provided on an other end of the sealing body structure along the axial direction of the valve needle, a valve port flow channel is provided inside the switch seat structure, and two ends of the valve port flow channel are respectively in communication with interior of the sealing body structure and the second through section, wherein the sealing body structure and the switch seat structure are provided in the mounting section; and the valve needle controls communication/disconnection of the first through section and the second through section by opening/closing the valve port flow channel.

Further, a portion of the switch seat structure extends into the interior of the sealing body structure, the portion is an insertion section, and the insertion section is in sealing fit with the inner wall of the sealing body structure; the valve port flow channel runs through the insertion section to communicate with the interior of the sealing body structure; and an opening of the valve port flow channel located in the insertion section is a tapered opening, the valve needle includes a transmission section, a first tapered section and a second tapered section which are sequentially connected to each other along the axial direction of the valve needle, and the transmission section is connected to the transmission structure; wherein when the valve needle closes the valve port flow channel, an outer periphery of the first tapered section is in sealing fit with the tapered opening, and the second tapered section extends into the valve port flow channel.

Further, the electronic expansion valve further includes a first sealing ring structure, an outer periphery of the first sealing ring structure is in sealing fit with an inner wall of the mounting section; wherein the first sealing ring structure is located in a groove formed by the switch seat structure and the sealing body structure.

Further, the electronic expansion valve further includes a second sealing ring structure, the mounting section is provided with a mounting groove, and at least a portion of the second sealing ring is arranged in the mounting groove; and two ends of the second sealing ring structure along an axial direction of the valve needle respectively abut against a bottom wall of the mounting seat structure and a bottom wall of the mounting groove, so as to seal a gap between the mounting groove and the mounting seat structure.

Further, the electronic expansion valve further includes an electromagnetic coil structure, the electromagnetic coil structure is arranged outside the protective housing structure and is in communication with an external power supply, and is used for driving the drive screw to move axially.

According to another aspect of the present disclosure, a thermal management system is provided. The thermal management system includes the flow control device as described above.

By applying the technical solutions of the present disclosure, the present disclosure provides a valve seat, the valve seat is used for mounting a check valve and an electronic expansion valve, the valve seat is internally provided with a first flow channel and a second flow channel; the check valve is provided in the first flow channel and operates in cooperation with an inner wall of the first flow channel, such that a liquid in the first flow channel flows in a single direction; and the electronic expansion valve is provided on the valve seat and cooperates with the second flow channel, to control opening/closing of the second flow channel; wherein the first flow channel and the second flow channel are independently arranged at an interval inside the valve seat. In the present disclosure, the first flow channel and the second flow channel are independently arranged at an interval inside the valve seat, the flow channel controlled by the check valve and the flow channel controlled by the electronic expansion valve operate independently without affecting each other and without intersection, thereby ensuring that the expansion valve and the check valve can operate independently; and a regulation effects of the check valve and the electronic expansion valve can be achieved respectively, thereby effectively meeting an use requirements of the thermal management system in multiple modes and multiple working conditions. The valve seat proposed in the present disclosure has reliable operation, simple structure, easy processing and low costs, can flexibly adapt to different check valves and electronic expansion valves by flexibly setting specific parameters of the first flow channel and the second flow channel, and is suitable for large-area popularization and use; the flow control device applying the valve seat proposed in the present disclosure has both a throttling function and an one-way straight-through function, and can selectively enable the throttling function and/or the straight-through function according to use requirements of the thermal management system during actual use; and the flow control device applying the valve seat proposed in the present disclosure has a relatively high product integration degree and a compact structure, which is beneficial to simplifying the pipeline connection and reducing an occupied space.

### Brief Description of the Drawings

The drawings of the description, constituting a part of the present disclosure, are used for providing further understanding of the present disclosure, and the illustrative embodiments of the present disclosure and illustrations thereof are used to explain the present disclosure, rather than constitute inappropriate limitation on the present disclosure. In the drawings:
Fig. 1 shows a schematic diagram of an internal structure of a valve seat provided according to embodiments of the present disclosure;
Fig. 2 shows a schematic diagram of a partial structure of a flow control device provided according to embodiments of the present disclosure;
Fig. 3 shows a partial enlarged view of the position of a check valve in Fig. 2; and
Fig. 4 shows a partially enlarged view of the position of a switch seat structure in Fig. 2.

The figures above include the following reference signs:
10. check valve; 11. guide member; 111. first limiting cavity; 12. piston member; 121. second limiting cavity; 13. sealing member; 14. elastic member;
20. electronic expansion valve; 21. valve needle; 211. transmission section; 212. first tapered section; 213. second tapered section; 22. drive screw; 23. transmission structure; 24. protective housing structure; 241. protecting cavity; 25. mounting seat structure; 26. sealing body structure; 27. switch seat structure; 271. valve port flow channel; 272. insertion section; 28. first sealing ring structure; 29. second sealing ring structure; 291. electromagnetic coil structure;
30. first flow channel; 31. one-way inlet; 32. one-way outlet; 33. inflow section; 34. opening/closing section; 341. enlarged-diameter section; 342. straight cylindrical portion; 35. outflow section; 36. first valve port;
40. second flow channel; 41. first through port 42. second through port; 43. first through section; 44. mounting section; 441. mounting groove; 45. second through section.

### Detailed Description of the Embodiments

Hereinafter, the technical solutions in embodiments of the present disclosure will be described clearly and thoroughly with reference to the accompanying drawings of the embodiments of the present disclosure. Obviously, the embodiments as described are only some of the embodiments of the present disclosure, and are not all of the embodiments of the present disclosure. The following description of at least one exemplary embodiment is merely illustrative in nature and is in no way intended to limit the present disclosure and any applications or uses thereof. All other embodiments obtained by a person of ordinary skill in the art on the basis of the embodiments of the present disclosure without any inventive effort shall all fall within the scope of protection of the present disclosure.

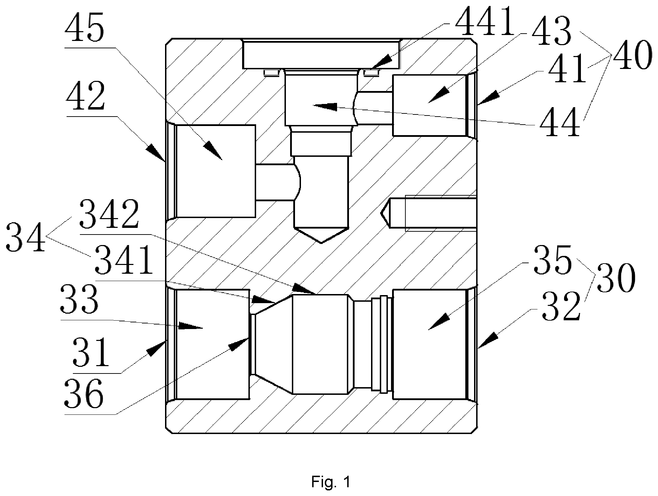

As shown in Fig. 1 to Fig. 4, embodiments of the present disclosure provide a valve seat, wherein the valve seat is used for mounting a check valve 10 and an electronic expansion valve 20, and the valve seat is internally provided with a first flow channel 30 and a second flow channel 40; the check valve 10 is provided in the first flow channel 30 and operates in cooperation with an inner wall of the first flow channel 30, such that a liquid in the first flow channel 30 flows in a single direction; and the electronic expansion valve 20 is provided on the valve seat and cooperates with the second flow channel 40, to control opening/closing of the second flow channel 40; wherein the first flow channel 30 and the second flow channel 40 are independently arranged at an interval inside the valve seat.

**In** the present disclosure, the first flow channel 30 and the second flow channel 40 are independently arranged at an interval inside the valve seat, the flow channel controlled by the check valve 10 and the flow channel controlled by the electronic expansion valve 20 operate independently without affecting each other and without intersection, thereby ensuring that the expansion valve and the check valve 10 can operate independently; and a regulation effects of the check valve 10 and the electronic expansion valve 20 can be achieved respectively, thereby effectively meeting an use requirements of a thermal management system in multiple modes and multiple working conditions. The valve seat proposed in the present disclosure has reliable operation, simple structure, easy processing and low costs, can flexibly adapt to different check valves 10 and electronic expansion valves 20 by flexibly setting specific parameters of the first flow channel 30 and the second flow channel 40, and is suitable for large-area popularization and use; a flow control device applying the valve seat proposed in the present disclosure has both a throttling function and a one-way straight-through function, and can selectively enable the throttling function and/or the straight-through function according to use requirements of the thermal management system during actual use; and the flow control device applying the valve seat proposed in the present disclosure has a relatively high product integration degree and a compact structure, which is beneficial to simplifying the pipeline connection and reducing the occupied space.

**It** should be noted that the fact that the first flow channel 30 and the second flow channel 40 are independently arranged at an interval inside the valve seat means that the first flow channel 30 is not in communication with the second flow channel 40.

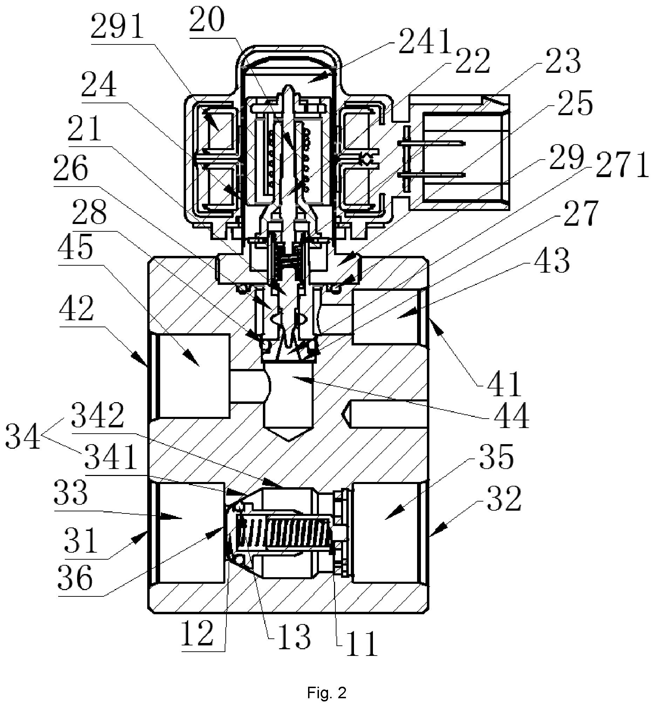

As shown in Figs. 1 and 2, two ends of the second flow channel 40 are a first through port 41 and a second through port 42 respectively, the first through port 41 and the second through port 42 are respectively provided at two opposite sides of an outer periphery of the valve seat, and a diameter of the first through port 41 is different from a diameter of the second through port 42; when the electronic expansion valve 20 is in an open state, the first through port 41 is in communication with the second through port 42; and when the electronic expansion valve 20 is in a closed state, the first through port 41 is disconnected from the second through port 42.

By arranging the first through port 41 and the second through port 42 on two sides of the outer periphery of the valve seat respectively, a machining of the first through port 41 and the second through port 42 on the valve seat and subsequent mounting on a pipeline are facilitated; and by configuring the diameter of the first through port 41 to be different from the diameter of the second through port 42, the second flow channel 40 has a fluid pressure regulation function.

It should be noted that during practical use, the diameters of the first through port 41 and the second through port 42 can be flexibly set according to the change requirements of a flow rate, flow direction and pressure regulated for actual fluid, so as to improve an applicability.

As shown in Figs. 1 and 2, the second flow channel 40 includes a first through section 43, a mounting section 44 and a second through section 45 which are sequentially in communication with each other, and a portion of the electronic expansion valve 20 is provided in the mounting section 44 and cooperates with an inner wall of the mounting section 44; and the first through port 41 is an opening of the first through section 43, and the second through port 42 is an opening of the second through section 45; wherein a central axis of the first through section 43 is parallel to a central axis of the second through section 45; the central axis of the first through section 43 and the central axis of the second through section 45 are perpendicular to a central axis of the mounting section 44; and the electronic expansion valve 20 controls opening/closing of the second flow channel 40 by means of lifting/lowering of a valve needle 21 inside the electronic expansion valve, and a lifting/lowering direction of the valve needle 21 is parallel to the central axis of the mounting section 44.

By configuring the central axis of the first through section 43 to be parallel to the central axis of the second through section 45, a machining and forming of the first through section 43 and the second through section 45 on the valve seat and subsequent direct mounting on pipelines are facilitated; and by configuring the central axis of the first through section 43 and the central axis of the second through section 45 to be perpendicular to the central axis of the mounting section 44, subsequent convenient mounting and reliable operation of the electronic expansion valve 20 are ensured.

**In** an embodiment of the present disclosure, the first through port 41 and the second through port 42 are respectively provided in a chamfered manner, so as to facilitate subsequent centering and accurate mounting of pipeline joints.

As shown in Figs. 1, 2 and 3, two ends of the first flow channel 30 are a one-way inlet 31 and a one-way outlet 32 respectively, the one-way outlet 32 and the one-way inlet 31 are respectively provided at two opposite sides of the outer periphery of the valve seat, and a diameter of the one-way inlet 31 is the same as a diameter of the one-way outlet 32; one of the one-way inlet 31 and the one-way outlet 32, and the second through port 42 are located on a same side of the outer periphery of the valve seat, and an other thereof and the first through port 41 are located on a same side of the outer periphery of the valve seat; when the check valve 10 is in an open state, the one-way outlet 32 is in communication with the one-way inlet 31, and a liquid enters from the one-way inlet 31, and flows out from the one-way outlet 32; and when the check valve 10 is in a closed state, the one-way outlet 32 is disconnected from the one-way inlet 31. By setting the diameter of the one-way inlet 31 and the diameter of the one-way outlet 32 to be the same, this facilitates machining and forming of the one-way inlet 31 and the one-way outlet 32 in one time, and a pressure change of the fluid after passing through the first flow channel 30 is relatively small.

As shown in Figs. 1, 2 and 3, the first flow channel 30 includes an inflow section 33, an opening/closing section 34 and an outflow section 35 which are sequentially in communication with each other, wherein the check valve 10 is movably arranged in the opening/closing section 34 and is in limiting fit with an inner wall of the opening/closing section 34; the one-way inlet 31 is an inlet of the inflow section 33, and the one-way outlet 32 is an outlet of the outflow section 35; wherein a central axis of the inflow section 33, a central axis of the opening/closing section 34 and a central axis of the outflow section 35 are collinear; and a movement direction of the check valve 10 is parallel to the central axis of the opening/closing section 34. By configuring the central axis of the inflow section 33, the central axis of the opening/closing section 34 and the central axis of the outflow section 35 to be collinear, a structure of the first flow channel 30 is simplified and the flow is smooth.

In an embodiment of the present disclosure, the one-way inlet 31 and the one-way outlet 32 are respectively provided in a chamfered manner, so as to facilitate subsequent centering and accurate mounting of pipeline joints.

As shown in Figs. 1, 2 and 3, a first valve port 36 is provided at a joint between the opening/closing section 34 and the inflow section 33, and the check valve 10 is used for opening/closing the first valve port 36; an end of the opening/closing section 34 close to the first valve port 36 is provided with an enlarged-diameter portion 341, and the enlarged-diameter portion 341 has a flow area larger than a flow area of the first valve port 36; wherein an inner wall surface of the enlarged-diameter portion 341 is a tapered surface; and the opening/closing section 34 further includes a straight cylindrical portion 342 in communication with the enlarged-diameter portion 341, the straight cylindrical portion 342 has an inner diameter smaller than an inner diameter of the inflow section 33 and an inner diameter of the outflow section 35, and an inner wall surface of the straight cylindrical portion 342 is a cylindrical surface.

By setting the flow area of the enlarged-diameter portion 341 to be larger than the flow area of the first valve port 36 (for example, a maximum size of the enlarged-diameter portion is larger than an inner diameter of the first valve port), throttling occurring in the first flow channel 30 is avoided, thereby further improving a flow capacity of the first flow channel 30; and by setting the inner diameter of the straight cylindrical portion 342 to be smaller than the inner diameter of the inflow section 33 and the inner diameter of the outflow section 35, a flow rate of the fluid in the straight cylindrical portion 342 is effectively improved.

As shown in Figs. 1 and 2, the second flow channel 40 includes a first through section 43, a mounting section 44 and a second through section 45 which are sequentially in communication with each other, and a portion of the electronic expansion valve 20 is provided in the mounting section 44 and cooperates with an inner wall of the mounting section 44; and a central axis of the first through section 43 and a central axis of the second through section 45 are parallel to the central axis of the inflow section 33, the central axis of the opening/closing section 34 and the central axis of the outflow section 35. With such arrangement, when the valve seat is drilled and machined, at least the first through section 43, the second through section 45, the inflow section 33 and the outflow section 35 can be drilled in sequence by positioning and machining once, thereby ensuring that a whole valve seat is easy to machine and effectively reducing a machining cost.

The present disclosure further provides a flow control device, wherein the flow control device is used in a thermal management system, to control flowing of a liquid; and the flow control device includes a check valve 10, an electronic expansion valve 20 and the valve seat as described above, wherein the check valve 10 is provided in a first flow channel 30 of the valve seat, and the electronic expansion valve 20 cooperates with a second flow channel 40 of the valve seat. The flow control device proposed in the present disclosure has both a throttling function and a one-way straight-through function, and can selectively enable the throttling function and/or the straight-through function according to use requirements of the thermal management system during actual use; and the flow control device applying the valve seat proposed in the present disclosure has a relatively high product integration degree and a compact structure, which is beneficial to simplifying the pipeline connection and reducing the occupied space.

**It** should be noted that if the flow control device is applied to an air conditioner, the check valve 10 can prevent a refrigerant from flowing backward; if the flow control device is applied to a hydraulic system, the check valve 10 can prevent hydraulic oil from reversely flowing; and if the flow control device is applied to a pneumatic system, the check valve 10 can prevent compressed air from flowing reversely.

As shown in Fig. 2, the first flow channel 30 includes an inflow section 33, an opening/closing section 34 and an outflow section 35 which are sequentially in communication with each other, and a first valve port 36 is provided at a joint between the opening/closing section 34 and the inflow section 33; an end of the opening/closing section 34 close to the first valve port 36 is provided with an enlarged-diameter section 341; the check valve 10 includes a guide member 11, a piston member 12 and a sealing member 13; an end of the guide member 11 is fixedly arranged, and an other end thereof is in elastic limiting fit with an end of the piston member 12; an other end of the piston member 12 is arranged toward the first valve port 36; the sealing member 13 is mounted on an other end of the piston member 12 and is used for being in abutting fit with an inner wall of the enlarged-diameter portion 341; and the piston member 12 moves along a central axis of the opening/closing section 34 under guidance of the guide member 11, so as to drive the sealing member 13 to open/close the first valve port 36. With such an arrangement, not only an operational reliability of the check valve 10 is ensured, but also a structure of the check valve 10 tends to be simplified, thereby effectively reducing costs and facilitating subsequent maintenance and replacement.

**It** should be noted that during actual use, it has been found that during movement of the piston member 12 of the check valve 10 toward or away from the first valve port 36, throttling often occurs in the first flow channel 30 due to an expansion of the sealing member 13, which may hinder the flowing of the fluid, thereby adversely affecting normal operation of the check valve 10. Therefore, in the present disclosure, the enlarged-diameter portion 341 is provided in the opening/closing section 34, and the inner wall surface of the enlarged-diameter portion 341 is a tapered surface, thereby effectively avoiding throttling risks and improving the flow capacity.

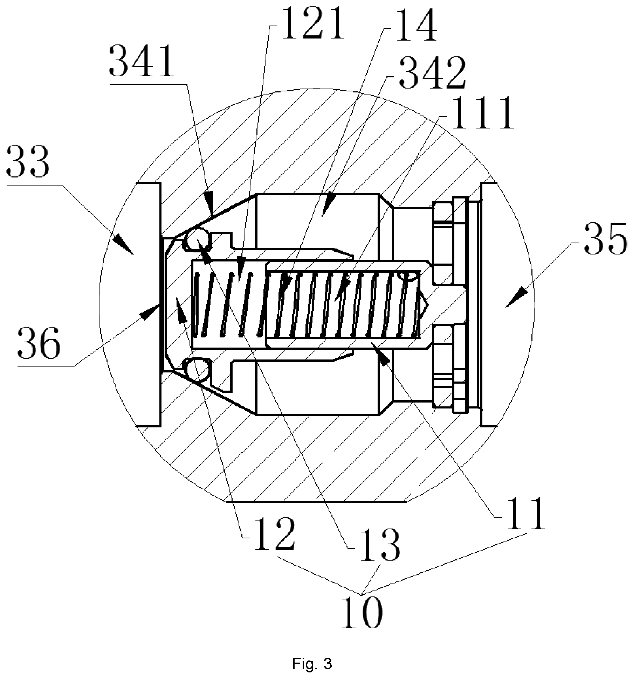

As shown in Fig. 3, the check valve 10 further includes an elastic member 14; the guide member 11 is internally provided with a first limiting cavity 111, the piston member 12 is internally provided with a second limiting cavity 121, and a portion of the guide member 11 is located in the second limiting cavity 121 and is in sliding limiting fit with an inner wall of the second limiting cavity 121; a portion of the elastic member 14 is located in the first limiting cavity 111, and an other portion is located in the second limiting cavity 121; and two ends of the elastic member 14 are respectively abutted against a bottom wall of the first limiting cavity 111 and a bottom wall of the second limiting cavity 21, such that the guide member 11 is in elastic fit with the piston member 2.

The elastic member 14 (e.g. a spring) is arranged between the guide member 11 and the piston member 12, so as to ensure quick response and self-adaptive regulation of the check valve 10 during opening and closing, thereby greatly improving the reliability and service life of check valve 10. In addition, such design helps to reduce vibration and noise during operation of the check valve 10, improves user experience, and reduces maintenance costs.

As shown in Fig. 2, the electronic expansion valve 20 includes a valve needle 21, a drive screw 22, and a transmission structure 23; the drive screw 22 is connected to the valve needle 21 by the transmission structure 23, the drive screw 22 is rotatable relative to the valve needle 21, and the drive screw 22 moves axially to drive the valve needle 21 to move axially, so as to control opening/closing of the electronic expansion valve 20.

By configuring the drive screw 22 and the transmission structure 23 to perform axial movement control of the valve needle 21, the electronic expansion valve 20 can precisely regulate the fluid flow, and is adapted to different operation requirements. Such design improves a precision and speed of valve control, enhances an adaptability and flexibility of the thermal management system in complex environments, reduces energy consumption, and increases an energy efficiency of a system as a whole. Moreover, since the drive screw 22 rotates relative to the valve needle 21 when moving axially, in the present disclosure, the transmission structure 23 is configured to connect the drive screw 22 and the valve needle 21, such that when the drive screw 22 moves axially, the valve needle 21 only moves axially, and does not rotate, thereby avoiding abrasion of a switch seat structure 27 caused by rotation of the valve needle 21, and prolonging a service life of the switch seat structure 27.

As shown in Fig. 2, the electronic expansion valve 20 further includes a protective housing structure 24 and a mounting seat structure 25, wherein the protective housing structure 24 is internally provided with a protective cavity 241, and at least portions of the drive screw 22 and the transmission structure 23 are located in the protective cavity 241; and the protective housing structure 24 is fixedly provided on the mounting seat structure 25; wherein the second flow channel 40 includes a first through section 43, a mounting section 44 and a second through section 45 which are sequentially in communication with each other, and at least a portion of the mounting seat structure 25 is provided in the mounting section 44, so as to cooperate with an inner wall of the mounting section 44, such that the electronic expansion valve 20 is mounted on the valve seat.

A design of the protective housing structure 24 and the mounting seat structure 25 not only protects the drive screw 22 and the transmission structure 23 inside the electronic expansion valve 20, but also simplifies a mounting process of the valve and reduces the maintenance difficulty. This structural design improves the operation stability of the electronic expansion valve, prolongs the service life thereof, and also enhances an overall reliability and performance of the thermal management system.

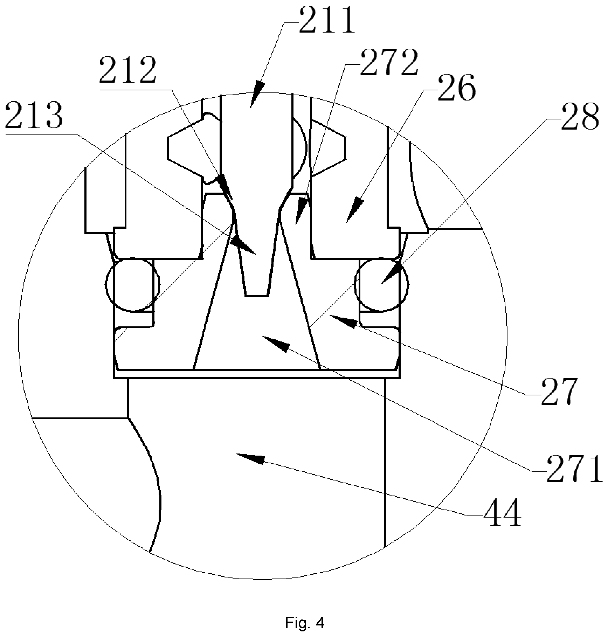

As shown in Figs. 2 and 4, the electronic expansion valve 20 further includes a sealing body structure 26 and a switch seat structure 27, wherein an end of the sealing body structure 26 along an axial direction of the valve needle 21 is provided at an end of the mounting seat structure 25 away from the protective housing structure 24, and the sealing body structure is internally in communication with the protective cavity 241; the valve needle 21 is movably provided on the sealing body structure 26 and is in limiting fit with an inner wall of the sealing body structure 26; the switch seat structure 27 is fixedly provided on an other end of the sealing body structure 26 along the axial direction of the valve needle 21, a valve port flow channel 271 is provided inside the switch seat structure 27, and two ends of the valve port flow channel 271 are respectively in communication with interior of the sealing body structure 26 and the second through section 45, wherein the sealing body structure 26 and the switch seat structure 27 are provided in the mounting section 44; and the valve needle 21 controls communication/disconnection of the first through section 43 and the second through section 45 by opening/closing the valve port flow channel 271.

An arrangement of the sealing body structure 26 and the switch seat structure 27 ensures good sealing performance of the electronic expansion valve 20 during opening/closing, and the valve needle 21 realizes fine regulation of the fluid flow by controlling the opening and closing of the valve port flow channel 271. This design improves a control precision of the electronic expansion valve, reduces an energy loss during an operation of the system, and increases an overall efficiency of the thermal management system.

As shown in Fig. 4, a portion of the switch seat structure 27 extends into the interior of the sealing body structure 26, the portion is an insertion section 272, and the insertion section 272 is in sealing fit with the inner wall of the sealing body structure 26; the valve port flow channel 271 runs through the insertion section 272 to communicate with the interior of the sealing body structure 26; and an opening of the valve port flow channel 271 located in the insertion section 272 is a tapered opening, the valve needle 21 includes a transmission section 211, a first tapered section 212 and a second tapered section 213 which are sequentially connected to each other along the axial direction of the valve needle 21, and the transmission section 211 is connected to the transmission structure 23; wherein when the valve needle 21 closes the valve port flow channel 271, an outer periphery of the first tapered section 212 is in sealing fit with the tapered opening, and the second tapered section 213 extends into the valve port flow channel 271.

By configuring accurate fit between the valve needle 21 and the tapered opening on the insertion section 272, and the insertion design of the second tapered section 213, the sealing performance of the electronic expansion valve in a closed state and the flow capability thereof in an open state are ensured. Such an optimized design improves the precision and reliability of valve control, and reduces a flow loss of the fluid during operation of the system.

As shown in Figs. 2 and 4, the electronic expansion valve 20 further includes a first sealing ring structure 28, the first sealing ring structure 28 is sleeved on the outer periphery of the switch seat structure 27, and an outer periphery of the first sealing ring structure 28 is in sealing fit with an inner wall of the mounting section 44; wherein the first sealing ring structure 28 is located in a groove formed by the switch seat structure 27 and the sealing body structure 26.

In some embodiments of the present disclosure, an end of the switch seat structure 27 away from the sealing body structure 26, and the sealing body structure 26 are in limiting fit with the first sealing ring structure 28, so as to constrain the first sealing ring structure 28 along the axial direction of the valve needle 21.

An arrangement of the first sealing ring structure 28, and the limiting fit between the first sealing ring structure and the switch seat structure 27 and the sealing body structure 26 ensure good sealing between the electronic expansion valve 20 and the valve seat during operation, and avoid fluid leakage. Such a design not only improves the operation reliability of the electronic expansion valve and the overall performance of the thermal management system, but also reduces the maintenance cost and energy consumption.

As shown in Fig. 2, the electronic expansion valve 20 further includes a second sealing ring structure 29, the mounting section 44 is provided with a mounting groove 441, and at least a portion of the second sealing ring is arranged in the mounting groove 441; and two ends of the second sealing ring structure 29 along an axial direction of the valve needle 21 respectively abut against a bottom wall of the mounting seat structure 25 and a bottom wall of the mounting groove 441, so as to seal a gap between the mounting groove 441 and the mounting seat structure 25.

A cooperation design between the second sealing ring structure 29 and the mounting groove 441 further enhances the sealing performance between the electronic expansion valve 20 and the valve seat, particularly under a high-pressure fluid working condition, and can effectively prevent fluid leakage and ensure a safe operation of the system.

As shown in Fig. 2, the electronic expansion valve 20 further includes an electromagnetic coil structure 291, the electromagnetic coil structure 291 is arranged outside the protective housing structure 24 and is in communication with an external power supply, and is used for driving the drive screw 22 to move axially.

By providing the electromagnetic coil structure 291, a stable and controllable driving force is provided for the drive screw 22, such that the electronic expansion valve can quickly respond to system requirements and achieve precise flow control.

The present disclosure also provides a thermal management system. The thermal management system includes the flow control device as described above. The thermal management system provided in the present disclosure can be used as an air conditioner, and in particular, used as a vehicle-mounted air conditioner; and the thermal management system provided in the present disclosure has a relatively high integration degree and a compact structure.

In summary, the present disclosure provides a valve seat, a flow control device and a thermal management system. In the present disclosure, the first flow channel 30 and the second flow channel 40 are independently arranged at an interval inside the valve seat, the flow channel controlled by the check valve 10 and the flow channel controlled by the electronic expansion valve 20 operate independently without affecting each other and without intersection, thereby ensuring that the expansion valve and the check valve 10 can operate independently; and the regulation effects of the check valve 10 and the electronic expansion valve 20 can be achieved respectively, thereby effectively meeting the use requirements of a thermal management system in multiple modes and multiple working conditions. The valve seat proposed in the present disclosure has reliable operation, simple structure, easy processing and low costs, can flexibly adapt to different check valves 10 and electronic expansion valves 20 by flexibly setting specific parameters of the first flow channel 30 and the second flow channel 40, and is suitable for large-area popularization and use; the flow control device applying the valve seat proposed in the present disclosure has both a throttling function and a one-way straight-through function, and can selectively enable the throttling function and/or the straight-through function according to use requirements of the thermal management system during actual use; and the flow control device applying the valve seat proposed in the present disclosure has a relatively high product integration degree and a compact structure, which is beneficial to simplifying the pipeline connection and reducing the occupied space.

The content above merely relates to preferred embodiments of the present disclosure and is not intended to limit the present disclosure. For a person skilled in the art, the present disclosure may have various modifications and variations. Any modifications, equivalent replacements, improvements, etc. made within the spirit and principle of the present disclosure shall all fall within the scope of protection of the present disclosure.

## Claims

1. A valve seat, wherein the valve seat is used for mounting a check valve (10) and an electronic expansion valve (20), and the valve seat is internally provided with a first flow channel (30) and a second flow channel (40); the check valve (10) is provided in the first flow channel (30) and operates in cooperation with an inner wall of the first flow channel (30), such that a liquid in the first flow channel (30) flows in a single direction; and the electronic expansion valve (20) is provided on the valve seat and cooperates with the second flow channel (40), to control opening/closing of the second flow channel (40); wherein the first flow channel (30) and the second flow channel (40) are independently arranged at an interval inside the valve seat.

2. The valve seat according to claim 1, wherein two ends of the second flow channel (40) are a first through port (41) and a second through port (42) respectively, and the first through port (41) and the second through port (42) are respectively provided at two opposite sides of an outer periphery of the valve seat; when the electronic expansion valve (20) is in an open state, the first through port (41) is in communication with the second through port (42); and when the electronic expansion valve (20) is in a closed state, the first through port (41) is disconnected from the second through port (42).

3. The valve seat according to claim 2, wherein the second flow channel (40) comprises a first through section (43), a mounting section (44) and a second through section (45) which are sequentially in communication with each other, and a portion of the electronic expansion valve (20) is provided in the mounting section (44) and cooperates with an inner wall of the mounting section (44); the first through port (41) is an opening of the first through section (43), and the second through port (42) is an opening of the second through section (45); wherein a central axis of the first through section (43) is parallel to a central axis of the second through section (45); the central axis of the first through section (43) and the central axis of the second through section (45) are perpendicular to a central axis of the mounting section (44); and the electronic expansion valve (20) controls opening/closing of the second flow channel (40) by means of lifting/lowering of a valve needle (21) inside the electronic expansion valve, and a lifting/lowering direction of the valve needle (21) is parallel to the central axis of the mounting section (44).

4. The valve seat according to claim 2, wherein two ends of the first flow channel (30) are a one-way inlet (31) and a one-way outlet (32) respectively, the one-way outlet (32) and the one-way inlet (31) are respectively provided at two opposite sides of the outer periphery of the valve seat, one of the one-way inlet (31) and the one-way outlet (32), and the second through port (42) are located at a same side on the outer periphery of the valve seat, and an other thereof and the first through port (41) are located at a same side on the outer periphery of the valve seat; when the check valve (10) is in an open state, the one-way outlet (32) is in communication with the one-way inlet (31), and a liquid enters from the one-way inlet (31), and flows out from the one-way outlet (32); and when the check valve (10) is in a closed state, the one-way outlet (32) is disconnected from the one-way inlet (31).

5. The valve seat according to claim 4, wherein the first flow channel (30) comprises an inflow section (33), an opening/closing section (34) and an outflow section (35) which are sequentially in communication with each other, wherein the check valve (10) is movably arranged in the opening/closing section (34) and is in limiting fit with an inner wall of the opening/closing section (34); the one-way inlet (31) is an inlet of the inflow section (33), and the one-way outlet (32) is an outlet of the outflow section (35); wherein a central axis of the inflow section (33), a central axis of the opening/closing section (34) and a central axis of the outflow section (35) are collinear; and a movement direction of the check valve (10) is parallel to the central axis of the opening/closing section (34).

6. The valve seat according to claim 5, wherein a first valve port (36) is provided at a joint between the opening/closing section (34) and the inflow section (33), and the check valve (10) is used for opening/closing the first valve port (36); an end of the opening/closing section (34) close to the first valve port (36) is provided with an enlarged-diameter portion (341), and the enlarged-diameter portion (341) has a flow area larger than a flow area of the first valve port (36); wherein an inner wall surface of the enlarged-diameter portion (341) is a tapered surface; and the opening/closing section (34) further comprises a straight cylindrical portion (342) in communication with the enlarged-diameter portion (341), the straight cylindrical portion (342) has an inner diameter smaller than an inner diameter of the inflow section (33) and an inner diameter of the outflow section (35), and an inner wall surface of the straight cylindrical portion (342) is a cylindrical surface.

7. The valve seat according to claim 5, wherein the second flow channel (40) comprises a first through section (43), a mounting section (44) and a second through section (45) which are sequentially in communication with each other, and a portion of the electronic expansion valve (20) is provided in the mounting section (44) and cooperates with an inner wall of the mounting section (44); and a central axis of the first through section (43) and a central axis of the second through section (45) are parallel to the central axis of the inflow section (33), the central axis of the opening/closing section (34) and the central axis of the outflow section (35).

8. A flow control device, wherein the flow control device is used in a thermal management system, to control flowing of a liquid; and the flow control device comprises a check valve (10), an electronic expansion valve (20) and the valve seat according to any one of claims 1 to 7, wherein the check valve (10) is provided in the first flow channel (30) of the valve seat, and the electronic expansion valve (20) cooperates with the second flow channel (40) of the valve seat.

9. The flow control device according to claim 8, wherein the first flow channel (30) comprises an inflow section (33), an opening/closing section (34) and an outflow section (35) which are sequentially in communication with each other, and a first valve port (36) is provided at a joint between the opening/closing section (34) and the inflow section (33); an end of the opening/closing section (34) close to the first valve port (36) is provided with an enlarged-diameter section (341); the check valve (10) comprises a guide member (11), a piston member (12) and a sealing member (13); an end of the guide member (11) is fixedly arranged, and an other end thereof is in elastic limiting fit with an end of the piston member (12); an other end of the piston member (12) is arranged toward the first valve port (36); the sealing member (13) is mounted on an other end of the piston member (12) and is used for being in abutting fit with an inner wall of the enlarged-diameter portion (341); and the piston member (12) moves along a central axis of the opening/closing section (34) under guidance of the guide member (11), so as to drive the sealing member (13) to open/close the first valve port (36).

10. The flow control device according to claim 9, wherein the check valve (10) further comprises an elastic member (14); the guide member (11) is internally provided with a first limiting cavity (111), the piston member (12) is internally provided with a second limiting cavity (121), and a portion of the guide member (11) is located in the second limiting cavity (121) and is in sliding limiting fit with an inner wall of the second limiting cavity (121); a portion of the elastic member (14) is located in the first limiting cavity (111), and an other portion is located in the second limiting cavity (121); and two ends of the elastic member (14) are respectively abutted against a bottom wall of the first limiting cavity (111) and a bottom wall of the second limiting cavity (121), such that the guide member (11) is in elastic fit with the piston member (12).

11. The flow control device according to claim 8, wherein the electronic expansion valve (20) comprises a valve needle (21), a drive screw (22), and a transmission structure (23); the drive screw (22) is connected to the valve needle (21) by the transmission structure (23), the drive screw (22) is rotatable relative to the valve needle (21), and the drive screw (22) moves axially to drive the valve needle (21) to move axially, so as to control opening/closing of the electronic expansion valve (20).

12. The flow control device according to claim 11, wherein the electronic expansion valve (20) further comprises a protective housing structure (24) and a mounting seat structure (25), wherein the protective housing structure (24) is internally provided with a protective cavity (241), and at least portions of the drive screw (22) and the transmission structure (23) are located in the protective cavity (241); and the protective housing structure (24) is fixedly provided on the mounting seat structure (25); wherein the second flow channel (40) comprises a first through section (43), a mounting section (44) and a second through section (45) which are sequentially in communication with each other, and at least a portion of the mounting seat structure (25) is provided in the mounting section (44).

13. The flow control device according to claim 12, wherein the electronic expansion valve (20) further comprises a sealing body structure (26) and a switch seat structure (27), wherein an end of the sealing body structure (26) along an axial direction of the valve needle (21) is provided at an end of the mounting seat structure (25) away from the protective housing structure (24), and the sealing body structure is internally in communication with the protective cavity (241); the valve needle (21) is movably provided on the sealing body structure (26) and is in limiting fit with an inner wall of the sealing body structure (26); the switch seat structure (27) is fixedly provided on an other end of the sealing body structure (26) along the axial direction of the valve needle (21), a valve port flow channel (271) is provided inside the switch seat structure (27), and two ends of the valve port flow channel (271) are respectively in communication with interior of the sealing body structure (26) and the second through section (45), wherein the sealing body structure (26) and the switch seat structure (27) are provided in the mounting section (44); and the valve needle (21) controls communication/disconnection of the first through section (43) and the second through section (45) by opening/closing the valve port flow channel (271).

14. The flow control device according to claim 13, wherein a portion of the switch seat structure (27) extends into the interior of the sealing body structure (26), the portion is an insertion section (272), and the insertion section (272) is in sealing fit with the inner wall of the sealing body structure (26); the valve port flow channel (271) penetrates through the insertion section (272) to communicate with the interior of the sealing body structure (26); and an opening of the valve port flow channel (271) located in the insertion section (272) is a tapered opening, the valve needle (21) comprises a transmission section (211), a first tapered section (212) and a second tapered section (213) which are sequentially connected to each other along the axial direction of the valve needle (21), and the transmission section (211) is connected to the transmission structure (23); wherein when the valve needle (21) closes the valve port flow channel (271), an outer periphery of the first tapered section (212) is in sealing fit with the tapered opening, and the second tapered section (213) extends into the valve port flow channel (271).

15. The flow control device according to claim 13, wherein the electronic expansion valve (20) further comprises a first sealing ring structure (28), an outer periphery of the first sealing ring structure (28) is in sealing fit with an inner wall of the mounting section (44); wherein the first sealing ring structure (28) is located in a groove formed by the switch seat structure (27) and the sealing body structure (26).

16. The flow control device according to claim 12, wherein the electronic expansion valve (20) further comprises a second sealing ring structure (29), the mounting section (44) is provided with a mounting groove (441), and at least a portion of the second sealing ring is arranged in the mounting groove (441); and two ends of the second sealing ring structure (29) along an axial direction of the valve needle (21) respectively abut against a bottom wall of the mounting seat structure (25) and a bottom wall of the mounting groove (441), so as to seal a gap between the mounting groove (441) and the mounting seat structure (25).

17. The flow control device according to claim 12, wherein the electronic expansion valve (20) further comprises an electromagnetic coil structure (291), the electromagnetic coil structure (291) is arranged outside the protective housing structure (24) and is in communication with an external power supply, and is used for driving the drive screw (22) to move axially.

18. A thermal management system, wherein the thermal management system comprises the flow control device according to any one of claims 8 to 17.
